# EUROPEAN PATENT APPLICATION

(11) **EP 3 264 750 A1**
(43) Date of publication of application: **03.01.2018**
(21) Application number: 17158818.9
(22) Date of filing: 02.03.2017
(51) Int. Cl.: H04N 5/765, H04N 21/433, H04N 21/436, H04N 21/4363, H04N 21/454, H04N 21/472, H04N 21/61, H04L 12/28

(54) **METHOD, DEVICE AND SYSTEM FOR RECORDING TELEVISION PROGRAM**

(30) Priority: 30.06.2016 CN 201610512602
(71) Applicant: Beijing Xiaomi Mobile Software Co., Ltd., Beijing 100085 (CN)
(72) Inventor: FU, Qiang, Beijing, Beijing 100085 (CN); YIN, Mingjun, Beijing, Beijing 100085 (CN); HOU, Enxing, Beijing, Beijing 100085 (CN)
(74) Representative: dompatent von Kreisler Selting Werner - Partnerschaft von Patent- und Rechtsanwälten mbB

(57) **Abstract**

The present disclosure relates to a method, device and system for recording a television program, pertained to field of intelligent device. The method is applied in a router and includes: receiving an instruction for recording the television program, in which the instruction at least includes an appointment period and an identifier of a television channel; and downloading video data of being played by the television channel within the appointment period. By recording the video data via the router, a user may watch the video data recorded by the router within any period. Therefore, a technical problem that a manner for watching television programs in the related arts is much too monotonous is solved. As a result, the user may watch a live program within a period of feeling convenient, which is not limited by playing time of the live program, thereby improving the user experience.

## Description

### TECHNICAL FIELD

The present disclosure generally relates to the field of intelligent device, and more particularly, to a method, a device and a system for recording a television program.

### BACKGROUND

It is a common entertainment style nowadays to watch a television program via a television. Generally, a user may select his favorite television programs.

However, as playing time of some television programs and working time of the user clash, or as there are a certain reasons, the user may not watch the television programs in time, thereby missing the favorite television programs. Furthermore, a manner for watching the television program in the related arts is much too monotonous.

### SUMMARY

Embodiments of the present disclosure provide a method, a device and a system for recording a television program. Technical solutions are as follows.

According to a first aspect of embodiments of the present disclosure, there is provided a method for recording a television program, applied in a router. The method includes: receiving an instruction for recording the television program, in which the instruction at least includes an appointment period and an identifier of a television channel; and downloading video data of being played by the television channel within the appointment period.

The technical solutions provided in embodiments of the present disclosure may include following beneficial effects. By receiving the instruction for recording the television program in which the instruction at least includes the appointment period and the identifier of the television channel, and by downloading the video data of being played by the television channel within the appointment period, as the video data of being played by the television channel within the appointment period is recorded by the router, a user may watch the video data recorded by the router within any period. Therefore, a technical problem that a manner for watching television programs in the related arts is much too monotonous is solved. As a result, the user may watch a live program within a period of feeling convenient, which is not limited by playing time of the live program, thereby improving the user experience.

Alternatively, downloading video data of being played by the television channel within the appointment period includes: inquiring a playing address corresponding to the identifier of the television channel; and accessing to the playing address within the appointment period, downloading the video data of being played by the television channel from the playing address and storing the video data. By inquiring the playing address corresponding to the identifier of television channel, by accessing to the playing address within the appointment period, by downloading the video data of being played by the television channel within the appointment period from the playing address, and by storing the video data, a function that a designated television program is automatically recorded according to the appointment period and the playing address is realized.

Alternatively, downloading the video data of being played by the television channel from the playing address and storing the video data includes: acquiring a playing list of the television channel within the appointment period; and suspending downloading the video data of being played by the television channel within a period that an advertisement is played and downloading the video data of being played by the television channel without the period that the advertisement is played, if the advertisement is included in the playing list. Within the appointment period, as only the video data played by the television channel except from the period that the advertisement is played is needed, rather than downloading the advertisement within the appointment period, the user may be provided with the video data without advertisement data, thereby improving the user experience and saving storage space occupied by the advertisement data on the router as well.

Alternatively, the method further includes: receiving a request for checking a recording progress, in which the request includes a device identifier; inquiring a recording progress of recording, in which the recording is based on the instruction sent according to the device identifier; and sending the recording progress to a sending terminal for sending the request. By sending the inquired recording progress to the terminal for inquiring the recording progress, the user may acquire the recording progress in real time such that the user may choose whether to play the recorded video data or not according to the recording progress.

Alternatively, the method further includes: monitoring the recording progress of the recording based on the instruction sent according to the device identifier in real time; and updating a changed recording progress to the sending terminal if the recording progress changes. By pushing the changed recording progress to the terminal for inquiring the recording progress in real time, the recording progress displayed by the terminal for inquiring the recording progress is updated constantly, thereby providing the user with the recording progress and a recording speed.

According to a second aspect of embodiments of the present disclosure, there is provided a method for recording a television program, applied in a multimedia play device. The method includes: creating an instruction for recording the television program using an appointment period and a television channel; and sending the instruction to a router connected with the multimedia play device, in which the instruction is configured to trigger the router to download video data of being played by the television channel within the appointment period. By sending the instruction to the router so as to trigger the router to record the video data of being played by the television channel according to the instruction, the user may watch the video data recorded by the router within any period. Therefore, a technical problem that a manner for watching television programs in the related arts is much too monotonous is solved. As a result, the user may watch a live program within a period of feeling convenient, which is not limited by playing time of the live program, thereby improving the user experience.

Alternatively, the method further includes: sending a request for checking a recording progress to the router, in which the request includes a device identifier and is configured to trigger the router to inquire a recording progress of recording based on the instruction sent according to the device identifier and to feed the recording progress back to the multimedia play device; and receiving the recording progress fed back by the router. By sending the request for checking the recording progress to the router to acquire the recording progress of the router, the user may choose whether to play the video data recorded or not according to the recording progress.

Alternatively, the method further includes: receiving an updated recording progress related to the television channel and sent by the router in real time; and displaying the updated recording progress in real time at a position of the television channel in a playing list corresponding to the router, in which the playing list is configured to display television programs recorded by the router and designated by the multimedia play device. By receiving the updated recording progress sent by the router to update the recording progress displayed, the user is provided with the recording progress and a recording speed.

According to a third aspect of embodiments of the present disclosure, there is provided a device for recording a television program, applied in a router. The device includes: a first receiving module, configured to receive an instruction for recording the television program, in which the instruction at least includes an appointment period and an identifier of a television channel; and a downloading module, configured to download video data of being played by the television channel within the appointment period.

Alternatively, the downloading module includes: an inquiring sub-module, configured to inquire a playing address corresponding to the identifier of the television channel; and a first downloading sub-module, configured to access to the playing address within the appointment period, to download the video data of being played by the television channel from the playing address inquired by the inquiring sub-module, and to store the video data.

Alternatively, the first downloading sub-module further includes: an acquiring sub-module, configured to acquire a playing list of the television channel within the appointment period; and a second downloading sub-module, configured to suspend downloading the video data of being played by the television channel within a period that an advertisement is played, and to download the video data of being played by the television channel without the period that the advertisement is played, if the advertisement is included in the playing list acquired by the acquiring sub-module.

Alternatively, the device further includes: a second receiving module, configured to receive a request for checking a recording progress, in which the request includes a device identifier; an inquiring module, configured to inquire a recording progress of recording, in which the recording is based on the instruction sent according to the device identifier; and a sending module, configured to send the recording progress inquired by the inquiring module to a sending terminal for sending the request.

Alternatively, the device further includes: a monitoring module, configured to monitor the recording progress of the recording based on the instruction sent according to the device identifier in real time; and an updating module, configured to update a changed recording progress to the sending terminal if the monitoring module monitors that the recording progress changes.

According to a fourth aspect of embodiments of the present disclosure, there is provided a device for recording a television program, applied in a multimedia play device. The device includes: a creating module, configured to create an instruction for recording the television program using an appointment period and a television channel; and a first sending module, configured to send the instruction to a router connected with the multimedia play device, in which the instruction is configured to download video data of being played by the television channel within the appointment period.

Alternatively, the device further includes: a second sending module, configured to send a request for checking a recording progress, in which the request includes a device identifier and is configured to trigger the router to inquire a recording progress of recording based on the instruction sent according to the device identifier and to feed the recording progress back to the multimedia play device; and a first receiving module, configured to receive the recording progress fed back by the router.

Alternatively, the device further includes: a second receiving module, configured to receive an updated recording progress related to the television channel and sent by the router in real time; and a displaying module, configured to display the updated recording progress in real time at a position of the television channel in a playing list corresponding to the router, in which the playing list is configured to display television programs recorded by the router and designated by the multimedia play device.

According to a fifth aspect of embodiments of the present disclosure, there is provided a system for recording a television program. The system includes a router and a multimedia play device, in which the router includes the device for recording a television program provided in the third aspect of embodiments and in various alternative embodiments thereof; and the multimedia play device includes the device for recording a television program provided in the fourth aspect of embodiment and in various alternative embodiments thereof.

According to a sixth aspect of embodiments of the present disclosure, there is provided a device for recording a television program, applied in a router. The device includes: a processor; and a memory configured to store an instruction executable by the processor, in which the processor is configured to: receive an instruction for recording the television program, in which the instruction at least includes an appointment period and an identifier of a television channel; and download video data of being played by the television channel within the appointment period.

According to a seventh aspect of embodiments of the present disclosure, there is provided a device for recording a television program, applied in a multimedia play device. The device includes: a processor; and a memory configured to store an instruction executable by the processor, in which the processor is configured to: create an instruction for recording the television program using an appointment period and a television channel; and send the instruction to a router connected with the multimedia play device, in which the instruction is configured to trigger the router to download video data of being displayed by the television channel with the appointment period.

It is to be understood that, both the foregoing general description and the following detailed description are exemplary and explanatory only and are not restrictive of the present disclosure.

### BRIEF DESCRIPTION OF THE DRAWINGS

The accompanying drawings herein are incorporated in and become parts of the specification, illustrate embodiments consistent with the disclosure and, together with the description, serve to explain the principles of the disclosure.
Fig. 1 is schematic diagram illustrating an implementation environment related to embodiments of the present disclosure;
Fig. 2 is a flow chart showing a method for recording a television program according to an exemplary embodiment;
Fig. 3 is a flow chart showing a method for recording a television program according to another exemplary embodiment;
Fig. 4A is a flow chart showing a method for recording a television program according to another exemplary embodiment;
Fig. 4B is a schematic diagram illustrating a playing list of a television channel between 8 a.m. and 11 a.m. according to an exemplary embodiment;
Fig. 4C is a flow chart showing a method for recording a television program without recording an advertisement according to an exemplary embodiment;
Fig. 4D is a schematic diagram illustrating a recording progress list of a router XX according to an exemplary embodiment;
Fig. 5 is a block diagram of a device for recording a television progress according to an exemplary embodiment;
Fig. 6 is a block diagram of a device for recording a television progress according to another exemplary embodiment;
Fig. 7 is a block diagram of a device for recording a television progress according to another exemplary embodiment;
Fig. 8 is a block diagram of a device for recording a television progress according to another exemplary embodiment;
Fig. 9 is a block diagram of a device for recording a television progress according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

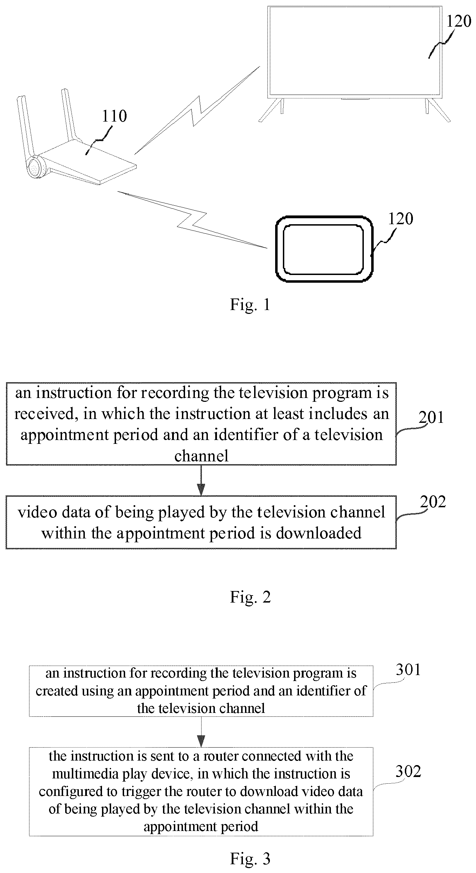

Fig. 1 is schematic diagram illustrating an implementation environment related to embodiments of the present disclosure. As shown in Fig. 1, the implementation environment may include: a router 110 and at least one multimedia play device 120.

In a smart home life, it is common to relate with the implementation environment shown in Fig. 1. The router 110 in the implementation environment is an intelligent router commonly. The router 110 may be configured with a hard disk and the hard disk is configured to store data. The router 110 may be installed a system therein, in which the system may acquire and analyze an instruction sent by other devices and may also send information to other devices.

The multimedia play device 120 related to in the implementation environment may be one of an intelligent television, an intelligent phone, a tablet computer, a desktop computer, an electronic reader, a laptop and the like.

The multimedia play device 120 herein may display information related to other intelligent devices included in the implementation environment thereon. In general, each of these intelligent devices, router 110 and multimedia play device 120 is bound with a user account. After the user account is logged in, the information related to the intelligent devices bound with the user account may be inquired using the user account. The information may be displayed on the multimedia play device 120.

The router 110 and the multimedia play device 120 may be connected each other via a wireless network mode, such as a wireless fidelity (Wi-Fi), to establish a connection.

Alternatively, if the multimedia play device 120 is an intelligent television, the router 110 may also connect with the intelligent television via a wire network mode.

Fig. 2 is a flow chart showing a method for recording a television program according to an exemplary embodiment. In the embodiment, the method is applied in the router 110 shown in Fig. 1 as an example. The method may include followings.

In step 201, an instruction for recording the television program is received, in which the instruction at least includes an appointment period and an identifier of a television channel.

In step 202, video data of being played by the television channel within the appointment period is downloaded.

As described above, with the method provided in embodiments of the present disclosure, by receiving the instruction for recording the television program, in which the instruction at least includes the appointment period and the identifier of the television channel, the video data of being played by the television channel within the appointment period is downloaded. By recording the video data of being played by the television channel within the appointment period via the router, a user may watch the video data recorded by the router within any period. Therefore a technical problem that a manner for watching television programs in the related arts is much too monotonous is solved. As a result, the user may watch a live program within a period of feeling convenient, which is not limited by playing time of the live program, thereby improving the user experience.

Fig. 3 is a flow chart showing a method for recording a television program according to another exemplary embodiment. The embodiment takes applying the method into the multimedia play device 120 as an example. The method may include followings.

In step 301, an instruction for recording the television program is created using an appointment period and an identifier of the television channel.

In step 302, the instruction is sent to a router connected with the multimedia play device, in which the instruction is configured to trigger the router to download video data of being played by the television channel within the appointment period.

As described above, with the method provided in embodiments of the present disclosure, by creating the instruction for recording the television program using the appointment period and the television channel, the instruction is sent to the router connected with the multimedia play device, in which the instruction is configured to trigger the router to download the video data of being played by the television channel within the appointment period. As there is provided in the present disclosure a method for recording a television program that is not played, a technical problem that a manner for watching the television program in the related arts is much too monotonous is solved. As a result, a user may record the television program for watching later if it is inconvenient to watch the television program, thereby improving the user experience.

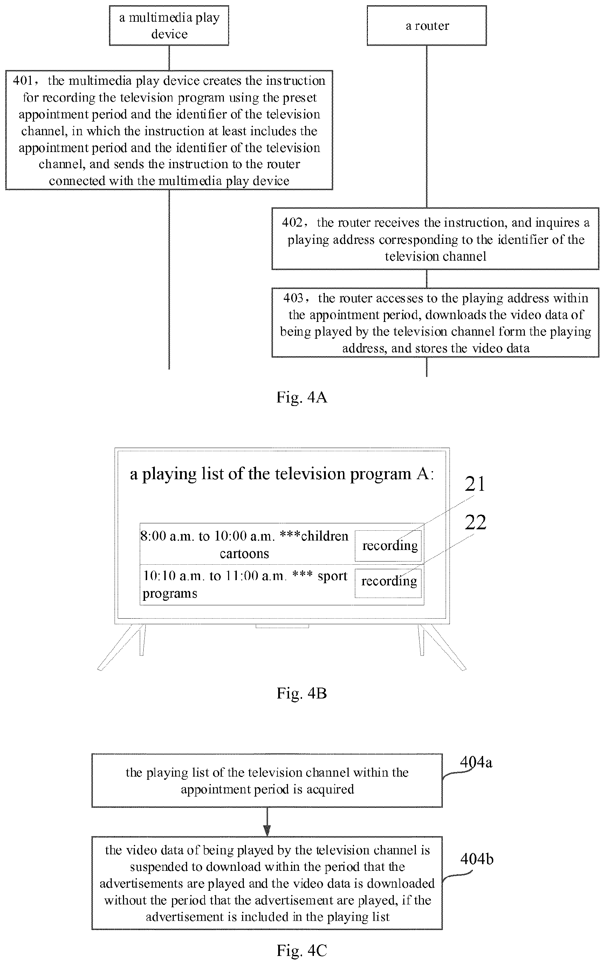

Fig. 4A is a flow chart showing a method for recording a television program according to another exemplary embodiment. In the embodiment, the method is applied in the implementation environment shown in Fig. 1 as an example. The method may include followings.

In step 401, the multimedia play device creates the instruction for recording the television program using the preset appointment period and the identifier of the television channel, and sends the instruction to the router connected with the multimedia play device, in which the instruction at least includes the appointment period and the identifier of the television channel.

In an actual application, the multimedia play device may acquire a playing list of each television channel from a station via network and may provide the playing list of each television channel to the user. For each television channel, content of television programs played by the television channel within various periods is included in the playing list. Fig. 4B is a schematic diagram illustrating a playing list of a television channel A between 8 a.m. and 11 a.m. on a certain day according to an exemplary embodiment. As shown in Fig. 4B, the playing list of the television channel A between 8 a.m. and 11 a.m. on a certain day is shown, in which the television program played by the television channel between 8 a.m. and 10 a.m. is "*** children cartoons" and the television program played by the television channel between 10 a.m. and 11 a.m. is "*** sport programs".

The user may choose the television program needing to be recorded according to the playing list provided by the multimedia play device. Generally, a recording control for starting to record the television program is contained in the playing list. Taking an example for illustrative purpose, referring to Fig. 4B again, a plurality of recording controls corresponding to the television programs respectively are contained in the playing list. For example, there is the recording control 21 corresponding to the television program "*** children cartoons" played by the television channel between 8 a.m. and 10 a.m. Also, there is the recording control 22 corresponding to the television program "*** sport programs" played by the television channel between 10 a.m. and 11 a.m.

If the recording control is triggered, the multimedia play device acquires recording information of the television program corresponding to the recording control triggered, that is, the television channel and the appointment period of the television program needing to be recorded are acquired. The appointment period herein is a period including a playing period of the television program played by the television channel. Taking an example for illustrative purpose, the playing period of the television channel is between 8 a.m. and 10 a.m., and then the appointment period may be between 8 a.m. and 10 a.m. and may also be between 7.58 a.m. and 10:02 a.m.

Alternatively, a starting time of the appointment period may be earlier than the starting time of the playing period of the television program needing to be recorded, and an ending time of the appointment period may be later than the ending time of the playing period of the television program needing to be recorded. Therefore, it may be avoided that parts of the television program are not recorded caused by an error between the playing period of the television program and a period provided in the playing list.

In another alternative implementation, as the television channel may comply with a predetermined playing rule when playing television programs, for example, the television channel 1 may play the television program A between 8 p.m. and 10 p.m. from Monday to Friday, the user may determine the playing list of the television channel 1 according to a historical watching condition of the television channel 1. And the user may input the appointment period according to a period between 8 p.m. and 10 p.m. if the user needs to record the television program A played by the television channel 1.

The multimedia play device creates the instruction for recording the television program using the appointment period and the television channel, therefore the instruction at least includes the appointment period and the identifier of the television channel.

In step 402, the router receives the instruction, and inquires a playing address corresponding to the identifier of the television channel.

As the video data provided by the television channel is acquired by the router when the multimedia play device plays the video data, the router may store a correspondence between the identifier of the television channel and the playing address locally.

Alternatively, even the video data provided by the television channel is not acquired by the router when the multimedia play device plays the video data, the router may also pre-store the correspondence between the identifier of the television channel and the playing address. The playing address herein is a live television program address played by the television channel, and the live television program address herein may be a live network show address of a or may be a live address provided by the station.

In step 403, the router accesses to the playing address within the appointment period, downloads the video data of being played by the television channel from the playing address, and stores the video data.

The router accesses to the playing address corresponding to the identifier of the television channel included in the instruction within the appointment period, and downloads the video data of being played by the television channel from the playing address, and stores the video data, which realizes to record the television program.

Alternatively, after receiving the instruction, the router may set a timing time according to a time equal to or earlier than the stating time of the appointment period included in the instruction. The television program begins to be recorded at the timing time and ends at a time equal to or later than the ending time of the appointment period included in the instruction.

The multimedia play device may acquire and play the video data recorded by the router within any period. It is to be illustrated that, even parts of the television program are not recorded by the router, the multimedia play device may still acquire and play the video data corresponding to the television program, which is downloaded and stored locally by the router.

As described above, with the method provided in embodiments of the present disclosure, by recording the instruction for recording the television program, in which the instruction at least includes the appointment period and the identifier of the television channel, by downloading the video data of being played by the television channel within the appointment period, and by recording the video data of being played by the television channel within the appointment period via the router, the user may watch a live program within a period of feeling convenient, which is not limited by playing time of the live program, thereby improving the user experience.

As some advertisements are inserted into the television program of being played by the television channel and there is no demand of the advertisements by the user, the advertisements may disturb the user of watching the television programs and may cause an uncomfortable watching. Therefore, in order to avoid a download and storage of the advertisements, a process of recording the television program without the advertisements is realized by sub-steps shown in Fig. 4C.

In step 404a, the playing list of the television channel within the appointment period is acquired.

Generally, the router may acquire the playing list within the appointment period from the server corresponding to the playing address when accessing to the playing address. The playing list herein is configured to record a period that the advertisements are played and a period that the advertisements are not played.

In step 404b, the video data of being played by the television channel is suspended to download within the period that the advertisements are played and the video data is downloaded without the period that the advertisement are played, if the advertisement is included in the playing list.

By acquiring the playing list of the television channel within the appointment period, by suspending downloading the video data of being played by the television channel and by downloading the video data of being played by the television channel, it is realized that the advertisements are not recorded when the television program is recorded, thereby improving the user experience and saving storage space occupied by advertisement data on the router.

Alternatively, the user may also inquire the recording progress of the router. For example, the router receives a request for checking the recording progress including a device identifier, inquires a recording progress of recording, in which the recording is based on the instruction sent according to the device identifier, and sends the recording progress to a sending terminal for sending the request.

It is to be illustrated that, if the multimedia play device desires to check the recording progress of the recording according to the instruction sent by the multimedia play device in the router, the multimedia play device may send the request for checking the recording progress including the identifier of the multimedia play device to the router. That is, the device identifier included in the request for checking the recording progress received by the router is the identifier of the multimedia play device.

If the multimedia play device desires to check the recording progress of the recording according to the instruction sent by other multimedia play devices in the router, the multimedia play device sends the request for checking the recording progress including the identifier of other multimedia play devices to the router, in which the request is configured to trigger the router to inquire the recording progress of the recording according to the identifier of other multimedia play devices. That is, the device identifier included in the request for checking the recording progress received by the router is the identifier of other multimedia play devices, and the request for checking the recording progress also includes an identifier of a terminal for sending the request for checking the recording progress (i.e. the identifier of the multimedia play device).

Taking an example for illustrative purpose, the intelligent television may inquire the recording progress of recording by the router according to the instruction for recording the television program sent by the intelligent television if the router records the television program according to the instruction for recording the television program sent by the intelligent television. And, a phone terminal connected with the router may also inquire the recording progress.

Accordingly, the multimedia play device sends the request for checking the recording progress including the device identifier to the router, in which the request for checking the recording progress is configured to trigger the router to inquire the recording progress of recording by the router based on the instruction for recording the television program sent according to the device identifier and to feed the recording progress back to the multimedia play device; and the multimedia play device receives the recording progress fed back by the router.

Alternatively, the router may also monitor the recording progress and may feed the recording progress back to the multimedia play device in real time, after receiving the request for checking the recording progress sent by the multimedia play device. For example, the router may monitor the recording progress of recording by the router based on the instruction for recording the television program sent according to the device identifier in real time, the router may update a changed recording progress to the sending terminal for sending the request if the recording progress changes.

Accordingly, after receiving the updated recording progress related to the television channel and sent by the router in real time, the multimedia play device displays the updated recording progress at a position of the television channel in a playing list corresponding to the router, in which the playing list is configured to display television programs recorded by the router and designated by the multimedia play device.

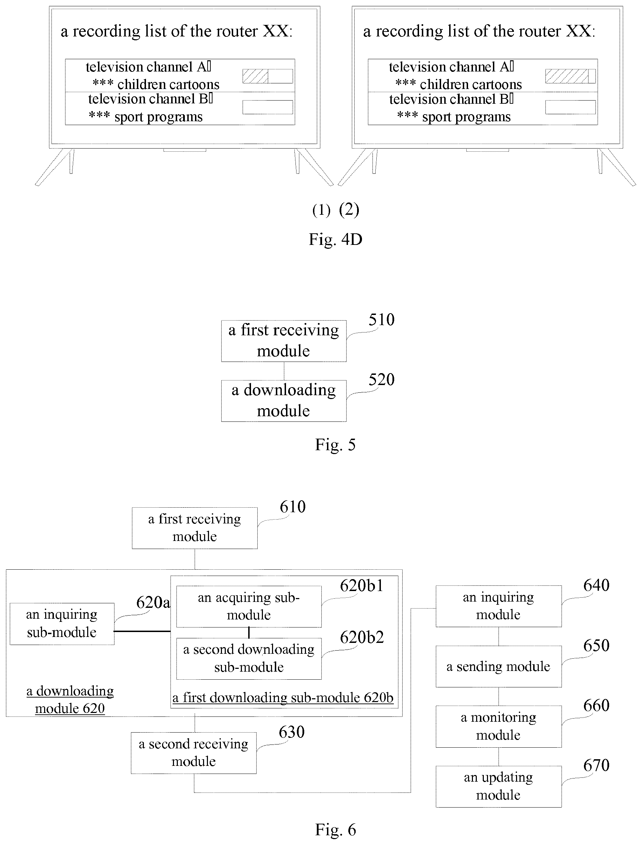

Taking an example for illustrative purpose, Fig. 4D is a schematic diagram illustrating a recording progress list of a router XX according to an exemplary embodiment. The user sends the instruction a for recording the television program "*** children cartoons" played by the television channel A between 8 a.m. and 10 a.m. to the router using a phone terminal and sends the instruction b for recording the television program "*** sport programs" played by the television channel B between 10 a.m. and 11 a.m. to the router using the phone terminal. Then, a recording list of recording according to the instruction sent by the phone terminal is shown as 4D (1) when the user checks the recording progress recorded by the router xx using the phone terminal at 9 a.m., and as the router xx monitors the recording progress in real time, the updated recording progress in the recording list is shown as 4D (2) at 9:45 a.m.

It is illustrated that, the recording progress may be expressed as a progress bar, a percent and the like, which is not limited in the embodiment and may be chosen and alternated according to an actual condition.

Below are device embodiments of the present disclosure, configured to execute method embodiments of the present disclosure. Those details that are not disclosed in the device embodiments may refer to method embodiments.

Fig. 5 is a block diagram of a device for recording a television progress according to an exemplary embodiment, in which the device is applied in a router. The device may include: a first receiving module 510 and a downloading module 520.

The first receiving module 510 is configured to receive an instruction for recording the television program, in which the instruction at least includes an appointment period and an identifier of a television channel.

The downloading module 520 is configured to download video data of being played by the television channel within the appointment period.

As described above, with the device provided in embodiments of the present disclosure, by receiving the instruction for recording the television program, in which the instruction at least includes the appointment period and the identifier of the television channel, the video data of being played by the television channel within the appointment period is downloaded. By recording the video data of being played by the television channel within the appointment period via the router, a user may watch the video data recorded by the router within any period. Therefore a technical problem that a manner for watching television programs in the related arts is much too monotonous is solved. As a result, the user may watch a live program within a period of feeling convenient, which is not limited by playing time of the live program, thereby improving the user experience.

Fig. 6 is a block diagram of a device for recording a television progress according to another exemplary embodiment, in which the device is applied in a router. The device may include: a first receiving module 610 and a downloading module 620.

The first receiving module 610 is configured to receive an instruction for recording the television program, in which the instruction at least includes an appointment period and an identifier of a television channel.

The downloading module 620 is configured to download video data of being played by the television channel within the appointment period.

Alternatively, the downloading module 620 includes: an inquiring sub-module 620a and a first downloading sub-module 620b.

The inquiring sub-module 620a is configured to inquire a playing address corresponding to the identifier of the television channel.

As the video data provided by the television channel is acquired by the router when the multimedia play device plays the video data, the router may store a correspondence between the identifier of the television channel and the playing address locally.

Alternatively, even the video data provided by the television channel is not acquired by the router when the multimedia play device plays the video data, the router may also pre-store the correspondence between the identifier of the television channel and the playing address. The playing address herein is a live television program address played by the television channel, and the live television program address herein may be a live network show address a or may be a live address provided by a station.

The first downloading sub-module 620b is configured to access to the playing address inquired by the inquiring sub-module 620a within the appointment period, to download the video data of being played by the television channel from the playing address, and to store the video data.

The router accesses to the playing address corresponding to the identifier of the television channel included in the instruction within the appointment period, downloads the video data of being played by the television channel from the playing address, and stores the video data, which realizes to record the television program.

Alternatively, after receiving the instruction, the router may set a timing time according to a time equal to or earlier than the stating time of the appointment period included in the instruction. The television program begins to be recorded at the timing time and ends at a time equal to or later than the ending time of the appointment period included in the instruction.

Alternatively, the first downloading sub-module 620b includes: an acquiring sub-module 620b1 and a second downloading sub-module 620b2.

The acquiring sub-module 620b1 is configured to acquire a playing list of the television channel within the appointment period.

Generally, the router may also acquire the playing list within the appointment period from the server corresponding to the playing address when accessing to the playing address. The playing list herein is configured to record a period that the advertisements are played and a period that the advertisements are not played.

The second downloading sub-module 620b2 is configured to suspend downloading the video data of being played by the television channel within a period that an advertisement is played, and to download the video data of being played by the television channel without the period that the advertisement is played, if the advertisement is included in the playing list acquired by the acquiring sub-module 620 b1.

By acquiring the playing list of the television channel within the appointment period, by suspending downloading the video data of being played by the television channel within a period that an advertisement is played and by downloading the video data of being played by the television channel without a period that an advertisement is played if the advertisement is included in the playing list, it is realized that the advertisements are not recorded when the television program is recorded, thereby improving the user experience and saving storage space occupied by advertisement data on the router.

Alternatively, the device further includes: a second receiving module 630, an inquiring module 640 and a sending module 650.

The second receiving module 630 is configured to receive a request for checking a recording progress, in which the request includes a device identifier.

The inquiring module 640 is configured to inquire a recording progress of recording, in which the recording is based on the instruction sent according to the device identifier.

The sending module 650 is configured to send the recording progress inquired by the inquiring module 640 to a sending terminal sending the request for checking a recording process.

Alternatively, the device further includes: a monitoring module 660 and an updating module 670.

The monitoring module 660 is configured to monitor the recording progress of the recording based on the instruction sent according to the device identifier in real time.

The updating module 670 is configured to update a changed recording progress to the sending terminal if the monitoring module 660 monitors that the recording progress changes.

As described above, with the device provided in embodiments of the present disclosure, by receiving the instruction for recording the television program, in which the instruction at least includes the appointment period and the identifier of the television channel, by downloading the video data of being played by the television channel within the appointment period, and by recording the video data of being played by the television channel within the appointment period via the router, a user may watch the video data recorded by the router within any period. Therefore a technical problem that a manner for watching television programs in the related arts is much too monotonous is solved. As a result, the user may watch a live program within a period of feeling convenient, which is not limited by playing time of the live program, thereby improving the user experience.

Alternatively, the playing address corresponding to the identifier of the television channel is inquired; and the playing address within the appointment period is accessed to, the video data of being played by the television channel is downloaded from the playing address and the video data is stored. By inquiring the playing address corresponding to the identifier of television channel, by accessing to the playing address within the appointment period, by downloading the video data of being played by the television channel within the appointment period from the playing address, and by storing the video data, a function that a designated television program is automatically recorded according to the appointment period and the playing address is realized.

Alternatively, by acquiring the playing list of the television channel within the appointment period, and by suspending downloading the video data of being played by the television channel within a period that an advertisement is played and downloading the video data of being played by the television channel without the period that the advertisement is played, if the advertisement is included in the playing list, as only the video data played by the television channel within the appointment period except from the period that the advertisement is played is needed, rather than downloading the advertisement within the appointment period, the user may be provided with the video data without advertisement data, thereby improving the user experience and saving storage space occupied by the advertisement data on the router as well.

Alternatively, the request for checking a recording progress is received, in which the request includes a device identifier; the recording progress of recording based on the instruction sent according to the device identifier is inquired, and the recording progress is sent to the sending terminal for sending the request. By sending the request for checking the recording progress to the router to acquire the recording progress of the router, the user may choose whether to play the video data recorded or not according to the recording progress.

Alternatively, the recording progress of the recording based on the instruction sent according to the device identifier is monitored in real time; and a changed recording progress is updated to the sending terminal if the recording progress changes. By pushing the changed recording progress to the terminal inquiring the recording progress in real time, the recording progress displayed by the terminal inquiring the recording progress is updated constantly, thereby providing the user with the recording progress and a recording speed.

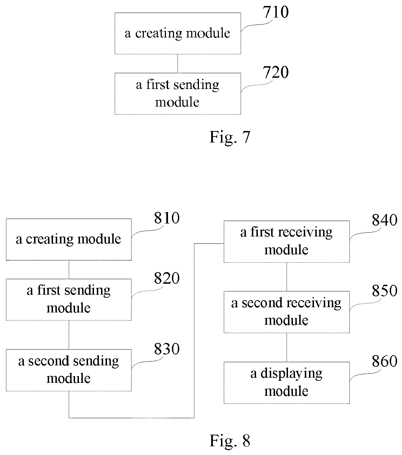

Fig. 7 is a block diagram of a device for recording a television progress according to another exemplary embodiment, in which the device is applied in a multimedia play device. The device may include: a creating module 710 and a first sending module 720.

The creating module 710 is configured to create an instruction for recording the television program using an appointment period and a television channel.

The first sending module 720 is configured to send the instruction to a router connected with the multimedia play device, in which the instruction is configured to trigger the router to download video data of being played by the television channel within the appointment period.

As described above, with the device provided in embodiments of the present disclosure, by creating the instruction for recording the television program using the appointment period and the television channel, by sending the instruction to the router connected with the multimedia play device, in which the instruction is configured to trigger the router to download the video data of being played by the television channel within the appointment period, a technical problem that a manner for watching the television program in the related arts is much too monotonous is solved. As a result, a user may record the television program for watching later if it is inconvenient to watch the television program, thereby improving the user experience.

Fig. 8 is a block diagram of a device for recording a television progress according to another exemplary embodiment, in which the device is applied in a multimedia play device. The device may include: a creating module 810 and a first sending module 820.

The creating module 810 is configured to create an instruction for recording the television program using an appointment period and a television channel.

In an actual application, the multimedia play device may acquire a playing list of each television channel from a station via network and may provide the playing list of each television channel to the user. For each television channel, content of television programs played by the television channel within various periods is included in the playing list.

The user may choose the television program needing to be recorded according to the playing list provided by the multimedia play device. Generally, a recording control for starting to record the television program is contained in the playing list.

If the recording control is triggered, the multimedia play device acquires recording information of the television program corresponding to the recording control triggered, that is, the television channel and the appointment period of the television program needing to be recorded are acquired. The appointment period herein is a period including a playing period of the television program played by the television channel.

Alternatively, a starting time of the appointment period may be earlier than the starting time of the playing period of the television program needing to be recorded, and an ending time of the appointment period may be later than the ending time of the playing period of the television program needing to be recorded. Therefore, it may be avoided that parts of the television program are not recorded caused by an error between the playing period of the television program and a period provided in the playing list.

In another alternative implementation, as the television channel may comply with a predetermined playing rule when playing television programs, for example, the television channel 1 may play the television program A between 8 p.m. and 10 p.m. from Monday to Friday, the user may determine the playing list of the television channel 1 according to a historical watching condition of the television channel 1. And the user may input the appointment period according to a period between 8 p.m. and 10 p.m. if the user needs to record the television program A played by the television channel 1.

The multimedia play device creates the instruction for recording the television program using the appointment period and the television channel, therefore the instruction at least includes the appointment period and the identifier of the television channel.

The first sending module 820 is configured to send the instruction to a router connected with the multimedia play device, in which the instruction is configured to download video data of being played by the television channel within the appointment period.

Alternatively, the device further includes: a second sending module 830 and a first receiving module 840.

The second sending module 830 is configured to send a request for checking a recording progress, in which the request includes a device identifier and is configured to trigger the router to inquire a recording progress of recording based on the instruction sent according to the device identifier and to feed the recording progress back to the multimedia play device.

The first receiving module 840 is configured to receive the recording progress fed back by the router.

Alternatively, the device further includes: a second receiving module 850 and a displaying module 860.

The second receiving module 850 is configured to receive the updated recording progress related to the television channel and sent by the router in real time.

The displaying module 860 is configured to display the updated recording progress in real time at a position of the television channel in a playing list corresponding to the router, in which the playing list is configured to display television programs recorded by the router and designated by the multimedia play device.

As described above, with the device provided in embodiments of the present disclosure, by creating the instruction for recording the television program using the appointment period and the television channel, by sending the instruction to the router connected with the multimedia play device, in which the instruction is configured to trigger the router to download the video data of being played by the television channel within the appointment period, a technical problem that a manner for watching the television program in the related arts is much too monotonous is solved. As a result, a user may record the television program for watching later if it is inconvenient to watch the television program, thereby improving the user experience.

Alternatively, the request for checking a recording progress is sent to the router, in which the request includes a device identifier and is configured to trigger the router to inquire a recording progress of recording based on the instruction sent according to the device identifier and to feed the recording progress back to the multimedia play device; and the recording progress fed back by the router is received. By sending the request for checking the recording progress to the router to acquire the recording progress of the router, the user may choose whether to play the video data recorded or not according to the recording progress.

Alternatively, the updated recording progress related to the television channel and sent by the router in real time is received; and the updated recording progress is displayed in real time at a position of the television channel in a playing list corresponding to the router, in which the playing list is configured to display television programs recorded by the router and designated by the multimedia play device. By receiving the updated recording progress sent by the router to update the recording progress displayed, the user is provided with the recording progress and a recording speed.

It is to be illustrated that, various functional modules are taken as examples for illustrative purpose when the device provided in embodiments realizes the function for recording the television program. However, in actual applications, the above function may be implemented via different functional modules according to actual demands. That is, structures in the router and the multimedia play device may be divided into different functional modules to implement all or parts of the above function.

Regarding to the device provided in embodiments, specific manner of each module operations has been described in detail in corresponding method embodiments, which is not elaborated herein.

An exemplary embodiment further provide a device for recording a television program, which may realize a method for recording a television program on a router. The device includes: a processor; and a memory configured to store an instruction executable by the processor; in which the processor is configured to:
receive an instruction for recording the television program, in which the instruction at least includes an appointment period and an identifier of a television channel; and
download video data of being played by the television channel within the appointment period.

An exemplary embodiment further provide a device for recording a television program, which may realize a method for recording a television program on a multimedia play device. The device includes: a processor; and a memory configured to store an instruction executable by the processor; in which the processor is configured to:
create an instruction for recording the television program using an appointment period and a television channel; and
send the instruction to a router connected with the multimedia play device, in which the instruction is configured to trigger the router to download video data of being displayed by the television channel with the appointment period.

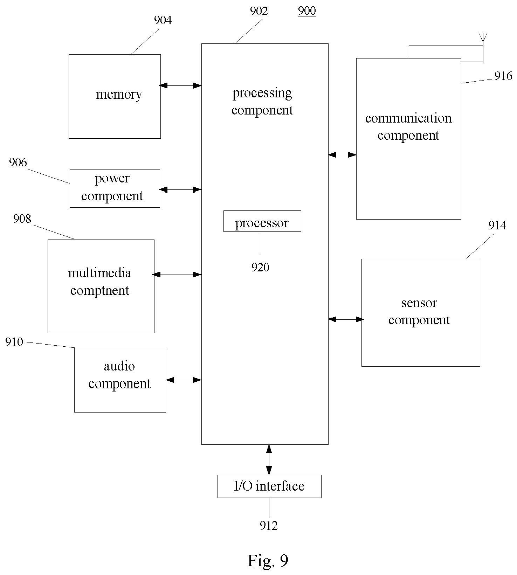

Fig. 9 is a block diagram of a device for recording a television progress according to another exemplary embodiment. For example, the device 900 may be a mobile phone, an intelligent television, a computer, a digital broadcasting terminal, a messaging device, a game console, a tablet device, a medical device, fitness equipment, a Personal Digital Assistant PDA, and the like.

Referring to Fig. 9, the device 900 may include the following one or more components: a processing component 902, a memory 904, a power component 906, a multimedia component 908, an audio component 910, an Input/Output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 908 includes a front camera and/or a rear camera. The front camera and/or the rear camera may receive external multimedia data while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface for the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900 and relative positioning of components (e.g. the display and the keypad of the device 900). The sensor component 914 may also detect a change in position of the device 900 or of a component in the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate wired or wireless communication between the device 900 and other devices. The device 900 can access a wireless network based on a communication standard, such as WIFI, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 904 including instructions. The above instructions are executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium. The device 900 may execute steps executed by a multimedia play device shown in Fig. 3 and 4A when an instruction stored in the storage medium is executed by the device 900.

A device of the router provided in embodiments of the present disclosure is similar to the device shown as Fig. 9. However, the router may not include one of or a combination of the multimedia component 908, the audio component 910 and the sensor component 914. The device of the router may have a processor therein, in which the processor is configured to execute steps of router in Fig. 2, 4A and 4C.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for recording a television program, applied in a router, comprising:
receiving an instruction for recording the television program, wherein the instruction at least comprises an appointment period and an identifier of a television channel (201); and
downloading video data of being played by the television channel within the appointment period (202).

2. The method according to claim 1, wherein downloading video data of being played by the television channel within the appointment period (202) comprises:
inquiring a playing address corresponding to the identifier of the television channel (402); and
accessing to the playing address within the appointment period, downloading the video data of being played by the television channel from the playing address and storing the video data (403).

3. The method according to claim 2, wherein downloading the video data of being played by the television channel from the playing address and storing the video data (402) comprises:
acquiring a playing list of the television channel within the appointment period (404a); and
suspending downloading the video data of being played by the television channel within a period that an advertisement is played and downing the video data of being played by the television channel without the period that the advertisement is played, if the advertisement is comprised in the playing list (404b).

4. The method according to any one of claims 1 to 3, further comprising:
receiving a request for checking a recording progress, wherein the request comprises a device identifier;
inquiring a recording progress of recording, wherein the recording is based on the instruction sent according to the device identifier; and
sending the recording progress to a sending terminal for sending the request, and/or
the method further comprises:
monitoring the recording progress of the recording based on the instruction sent according to the device identifier in real time; and
updating a changed recording progress to the sending terminal if the recording progress changes.

5. A method for recording a television program, applied in a multimedia play device, comprising:
creating an instruction for recording the television program using an appointment period and a television channel (301); and
sending the instruction to a router connected with the multimedia play device, wherein the instruction is configured to trigger the router to download video data of being played by the television channel within the appointment period (302).

6. The method according to claim 5, further comprising:
sending a request for checking a recording progress to the router, wherein the request comprises a device identifier and is configured to trigger the router to inquire a recording progress of recording based on the instruction sent according to the device identifier and to feed the recording progress back to the multimedia play device; and
receiving the recording progress fed back by the router.

7. The method according to claim 5 or 6, further comprising:
receiving an updated recording progress related to the television channel and sent by the router in real time; and
displaying the updated recording progress in real time at a position of the television channel in a playing list corresponding to the router, wherein the playing list is configured to display television programs recorded by the router and designated by the multimedia play device.

8. A device for recording a television program, applied in a router, comprising:
a first receiving module (510; 610), configured to receive an instruction for recording the television program, wherein the instruction at least comprises an appointment period and an identifier of a television channel; and
a downloading module (520; 620), configured to download video data of being played by the television channel within the appointment period.

9. The device according to claim 8, wherein the downloading module (520; 620) comprises:
an inquiring sub-module (620a), configured to inquire a playing address corresponding to the identifier of the television channel; and
a first downloading sub-module (620b), configured to access to the playing address within the appointment period, to download the video data of being played by the television channel from the playing address inquired by the inquiring sub-module (620a), and to store the video data.

10. The device according to claim 9, wherein the first downloading sub-module (620b) further comprises:
an acquiring sub-module (620b1), configured to acquire a playing list of the television channel within the appointment period; and
a second downloading sub-module (620b2), configured to suspend downloading the video data of being played by the television channel within a period that an advertisement is played, and to download the video data of being played by the television channel without the period that the advertisement is played, if the advertisement is comprised in the playing list acquired by the acquiring sub-module (620b1).

11. The device according to any one of claims 8 to 10, further comprising:
a second receiving module (630), configured to receive a request for checking a recording progress, wherein the request comprises a device identifier;
an inquiring module (640), configured to inquire a recording progress of recording, wherein the recording is based on the instruction sent according to the device identifier; and
a sending module (650), configured to send the recording progress inquired by the inquiring module (640) to a sending terminal for sending the request; and/or
a monitoring module (660), configured to monitor the recording progress of the recording based on the instruction sent according to the device identifier in real time; and
an updating module (670), configured to update a changed recording progress to the sending terminal if the monitoring module (660) monitors that the recording progress changes.

12. A device for recording a television program, applied in a multimedia play device, comprising:
a creating module (710; 810), configured to create an instruction for recording the television program using an appointment period and a television channel; and
a first sending module (720; 820), configured to send the instruction to a router connected with the multimedia play device, wherein the instruction is configured to download video data of being played by the television channel within the appointment period.

13. The device according to claim 12, further comprising:
a second sending module (830), configured to send a request for checking a recording progress, wherein the request comprises a device identifier and is configured to trigger the router to inquire a recording progress of recording based on the instruction sent according to the device identifier and to feed the recording progress back to the multimedia play device; and
a first receiving module (840), configured to receive the recording progress fed back by the router.

14. The device according to claim 12 or 13, further comprising:
a second receiving module (850), configured to receive the updated recording progress related to the television channel and sent by the router in real time; and
a displaying module (860), configured to display the updated recording progress in real time at a position of the television channel in a playing list corresponding to the router, wherein the playing list is configured to display television programs recorded by the router and designated by the multimedia play device.

15. A system for recording a television program, comprising a router and a multimedia play device, wherein
the router comprises the device according to any one of claims 8 to 11; and
the multimedia play device comprises the device according to any one of claims 12 to 14.
